Europäisches Patentamt

(19) European Patent Office

Office européen des brevets

(11) Publication number: **0 146 989**

**A1**

(12) # EUROPEAN PATENT APPLICATION

(21) Application number: 84201833.5

(51) Int. Cl.⁴: **F 25 B 15/02**

(22) Date of filing: **11.12.84**

(30) Priority: 20.12.83 NL 8304359

(43) Date of publication of application:
03.07.85 Bulletin 85/27

(84) Designated Contracting States:
DE FR GB IT NL SE

(71) Applicant: N.V. Philips' Gloeilampenfabrieken
Groenewoudseweg 1
NL-5621 BA Eindhoven(NL)

(72) Inventor: Dijkstra, Kees
c/o INT. OCTROOIBUREAU B.V. Prof. Holstlaan 6
NL-5656 AA Eindhoven(NL)

(72) Inventor: Huizinga, Jan
c/o INT. OCTROOIBUREAU B.V. Prof. Holstlaan 6
NL-5656 AA Eindhoven(NL)

(74) Representative: Cuppens, Hubertus Martinus
Maria et al,
INTERNATIONAAL OCTROOIBUREAU B.V. Prof.
Holstlaan 6
NL-5656 AA Eindhoven(NL)

(54) **Heat pump comprising a thermally driven liquid pump and liquid pump for use in a heat pump.**

(57) A heat pump in which there is arranged in a circuit between an absorber (7) and a generator (1) a liquid pump (9) comprising a piston (35) which is displaceable in a cylinder (33) and forms the separation between a gas chamber (37) and a liquid chamber (39) in which simultaneously prevails a pressure of comparatively low level during the suction stroke and a pressure of comparatively high level during the delivery stroke. A guide member (47) secured to the cylinder (33) defines with the piston (35) an auxiliary chamber (51) of variable volume in which liquid at comparatively low pressure at least during the delivery stroke is constantly present. The gas chamber (37) is connected to alternately to low and high gas pressure pipes (69 and 71, respectively) in the heat pump, whilst the liquid chamber (39) is connected synchronously therewith alternately to low and high liquid pressure pipes (11a and 11b, respectively) in the heat pump. The heat pump provides an attractive solution especially for domestic heating for pumping liquid solution between the generator and the absorber because of the low-noise and low-energy liquid pump driven by means of pressure differences in the heat pump itself.

"Heat pump comprising a thermally driven liquid pump and liquid
pump for use in a heat pump".

The invention relates to a heat pump comprising a first
circuit in which a working medium is conducted from a generator
sucessively to a condenser, an evaporator and an absorber and a
second circuit in which a solution of the working medium and a
solvent which is comparatively poor in working medium content is
conducted from the generator to the absorber and a solution of the
working medium and a solvent which is comparatively rich in working
medium content is conducted from the absorber to the generator,
the transport of the rich solution from the absorber to the generator taking place by means of a liquid pump which is arranged in
a connection between the absorber and the generator and having a
liquid piston displaceable in a cylinder in a reciprocatory manner
and whose movement is reversible by means of a gas change-over
valve which alternately connects a working surface of the liquid
piston to gaseous working medium in the heat pump at a comparatively
low and high pressure level.

The invention further relates to a liquid pump for use
in a heat pump of the kind described above.

In a known heat pump (see "Handbuch der Kältetechnik" by
R. Plank, Volume VII, 1959, p. 415-416) of the kind mentioned in
the opening paragraph, the rich solution is pumped from the absorber
to the generator by a liquid pump which is driven by utilizing
pressure differences in the working medium of the heat pump obtained
by heating. Consequently, the drive is in fact thermal because an
external mechanical source of force for displacing the liquid piston
is not necessary at all. The liquid piston has secured to it a
driving rod which is coupled to a gas piston. The movement is obtained in that with a substantially equal pressure difference
across both pistons the liquid piston is given a smaller working
surface than the gas piston. By means of a gas change-over value
operable by the driving rod, the direction of movement of the gas
piston is reversed. Each of the pistons is situated in a separate
cylinder which has a passage for the driving rod.

A disadvantage of the known heat pump and liquid pump, respectively, is that both pistons have to be provided with seals along a circumference of comparatively large length because of the considerable pressure difference across the pistons. Further, two passages for the driving rod are required, which moreover have to be sealed because a comparatively large pressure difference exists across these passages. Due to the use of two pistons, the known heat pump and liquid pump, respectively, is comparatively voluminous and rather complicated.

The invention has for its object to provide a heat pump in which the aforementioned disadvantages are avoided.

For this purpose, the invention is characterized in that said working surface constitutes a first working surface of the liquid piston facing a gas chamber located in the cylinder, which piston further has a second working surface which faces a liquid chamber located in the cylinder and which is smaller than the first working surface and is separated therefrom by the liquid piston, the gas chamber being connected to the gaseous medium in the heat pump alternately at a comparatively low and high pressure level, whilst synchronously therewith the liquid chamber is connected to the liquid solution in the heat pump alternately at a comparatively low and a comparatively high pressure level, and the cylinder being provided with a guide member for the piston, which guide member is arranged in the liquid chamber and extends into a recess in the piston, whilst an end face of the guide member defines with the recess an auxiliary chamber having a variable volume of liquid solution, whose pressure level at least during the delivery stroke of the liquid piston is substantially equal to the low pressure level of the liquid solution in the heat pump.

The invention further has for its object to provide a liquid pump for use in a heat pump in which the said disadvantages are avoided.

For this purpose, the invention is further characterized in that said working surface constitutes a first working surface of the liquid piston facing a gas chamber located in the cylinder, which piston further has a second working surface which faces a liquid chamber located in the cylinder and which is smaller than the first working surface and is separated therefrom by the liquid piston, the gas chamber being connected to the gaseous working medium in the heat pump alternately at a comparatively low and high pressure level, whilst synchronously therewith the liquid chamber is connected to the liquid solution in the heat pump alternately at a comparatively low and a high pressure level, and the cylinder being provided with a guide member for the piston, which guide member is arranged in the liquid chamber and extends into a recess in the piston, whilst an end face of the guide member defines with the recess an auxiliary chamber having a variable volume of liquid solution, whose pressure level at least during the delivery stroke of the liquid piston is substantially equal to the low pressure level of the liquid solution in the heat pump.

Since the comparatively low pressure level and the comparatively high pressure level invariably prevail during the suction stroke and the delivery stroke, respectively, both on the liquid side and on the gas side of the piston, the pressure difference across the piston is theoretically equal to zero. Due to low flow losses in the so-called thermal pump part of the heat pump, in practice only negligible pressure differences occur across the piston, which do not give rise to any sealing problem along the comparatively large circumference of the piston. The pressure difference between the liquid chamber and the auxiliary chamber does not give rise to problems either because the circumference of the auxiliary chamber is comparatively small.

A particular embodiment of a heat pump comprising a liquid pump of very compact construction is characterized in that the piston is provided with a gas duct which after rotational movement of the piston in a first direction during the suction stroke forms a connection between the gas chamber and a low-pressure gas port in the cylinder, and with a liquid duct which after rotational movement of the piston in the first direction during the suction stroke forms a connection between the liquid chamber and a low-pressure liquid port in the cylinder, whilst after rotational movement of the piston in a second direction opposite to the first direction the gas duct in the piston forms a connection between the gas chamber and a high-pressure gas port in the cylinder and the liquid duct in the piston forms a connection between the liquid chamber and a high-pressure liquid port in the cylinder.

A further embodiment of the heat pump in which the reversal of the movement of the liquid piston is obtained in a simple manner, is characterized in that the cylinder is provided with a fixedly arranged pin which in cooperation with a groove in the piston constitutes a guide for the piston, the groove having the form of a continuous curve comprising two tracks which are parallel to the central longitudinal axis of the piston and are interconnected by tracks extending obliquely with respect to said axis.

A still further embodiment of a heat pump in which leakage from high pressure to low pressure is limited to a minimum, is characterized in that the cylinder is provided with two sealing edges for the high-pressure gas port and the low-pressure gas port, respectively, which edges are pressed against the piston by an elastic bellows, and with two sealing edges for the high-pressure liquid port and the low-pressure liquid port, respectively, which edges are pressed against the piston by an elastic bellows, the bellows associated with the gas ports forming a connection between the relevant gas port and the gas duct in the piston, and the bellows associated with the liquid ports forming a connection between the relevant liquid port and the liquid duct in the piston.

Another embodiment of the heat pump in which a reversal of the movement of the liquid piston is obtained by a liquid change-over valve and a gas change-over valve is characterized in that the gas chamber is connected by means of the gas change-over valve to gaseous working medium in the heat pump alternately at a comparatively low and a comparatively high pressure, whilst synchronously therewith the liquid chamber is connected by means of a liquid change-over valve to liquid solution in the heat pump alternately at a comparatively low and a comparatively high pressure.

A preferred embodiment of the heat pump having a liquid change-over valve and a gas change-over valve integrated in a compact change-over unit is characterized in that an integrated unit with a liquid change-over valve and a gas change-over valve comprises a common valve slide displaceable in a housing in a reciprocatory manner and having two operative positions, whereby in a first operative position corresponding to the beginning of the suction stroke a connection is formed by means of a first recess in the valve slide between a first gas port in the housing at a comparatively low pressure level and a first working surface of the valve slide and a connection is formed by means of a second recess in the valve slide between a first liquid port in the housing at a comparatively high pressure level and a second working surface of the valve slide located opposite the first working surface and to the said auxiliary chamber, whilst in a second operative position corresponding to the beginning of the delivery stroke a connection is formed by means of the first recess between a second gas port in the housing at a comparatively high pressure level and the first working surface and a connection is formed by means of the second recess between a second liquid port in the housing at a comparatively low pressure level and the second working surface, and to the said auxiliary chamber.

A further embodiment of the heat pump in which dwelling at dead centres during the reversal of the direction of movement of the liquid piston is avoided in a simple manner, is characterized in that a valve slide of the liquid switch or of integrated unit with the liquid and gas change-over valves is mechanically coupled during a part of the suction stroke and the delivery stroke by means of a first spring and a second spring, respectively, to a follower rod which is secured to the piston and is arranged coaxially with the valve slide and with the piston and is freely displaceable with respect to the follower rod during another part of the suction stroke and the delivery stroke.

A still further embodiment of the heat pump in which leakage between gas and liquid ports of different pressures is avoided in a simple manner, is characterized in that in the gas change-over valve or in the integrated unit with the liquid and gas change-over valves, respectively, ports and spaces at comparatively high and comparatively low gas pressure are separated from each other by a sealing liquid of comparatively high pressure which is supplied through a duct system in the housing and the valve slide.

An embodiment of a liquid pump for use in a heat pump in which the use of seals is avoided as far as possible, is characterized in that said working surface constitutes a first working surface of the liquid piston facing a gas chamber located in the cylinder, which piston further has a second working surface which faces a liquid chamber located in the cylinder and which is smaller than the first working surface and is separated therefrom by the liquid piston, the gas chamber being connected to the gaseous working medium in the heat pump alternately at a comparatively low and a comparatively high pressure level, whilst synchronously therewith the liquid chamber is connected to the liquid solution in the heat pump alternately at comparatively low and a comparatively high pressure level, and the cylinder being provided with a guide member for the piston which guide member is arranged in the liquid chamber and extends into a recess in the piston, whilst an end face of the guide member defines with the recess an auxiliary chamber having a variable volume of liquid solution, whose pressure level at least during the delivery stroke of the liquid piston is substantially equal to the low pressure level of the liquid solution in the heat pump.

The invention will be described more fully with reference to the drawings, in which:

Figure 1 shows diagrammatically an absorption heat pump,

Figure 2 shows partly in longitudinal elevation and partly in longitudinal sectional view a liquid pump having a translatable and rotatable piston,

Figure 3 shows on an enlarged scale a sectional view taken on the line III-III in Figure 2,

Figure 4 is a developed view in a flat plane of the liquid piston of the liquid pump shown in Figures 2 and 3,

Figure 5 is a longitudinal sectional view of a liquid pump controlled by separate liquid and gas change-over valves,

Figure 6 shows on an enlarged scale the liquid change-over valve and gas change-over valve used in the liquid pump shown in Figure 5,

Figure 7 is a longitudinal sectional view of a liquid pump controlled by an integrated unit comprising liquid and gas change-over valves,

Figure 8 shows on an enlarged scale a longitudinal sectional view of the integrated valve unit used in the liquid pump shown in Figure 7,

Figure 9 is a cross-sectional view taken on the line IX-IX in Figure 8, and

Figure 10 shows on an enlarged scale a detail of the liquid pumps of Figures 5 and 7.

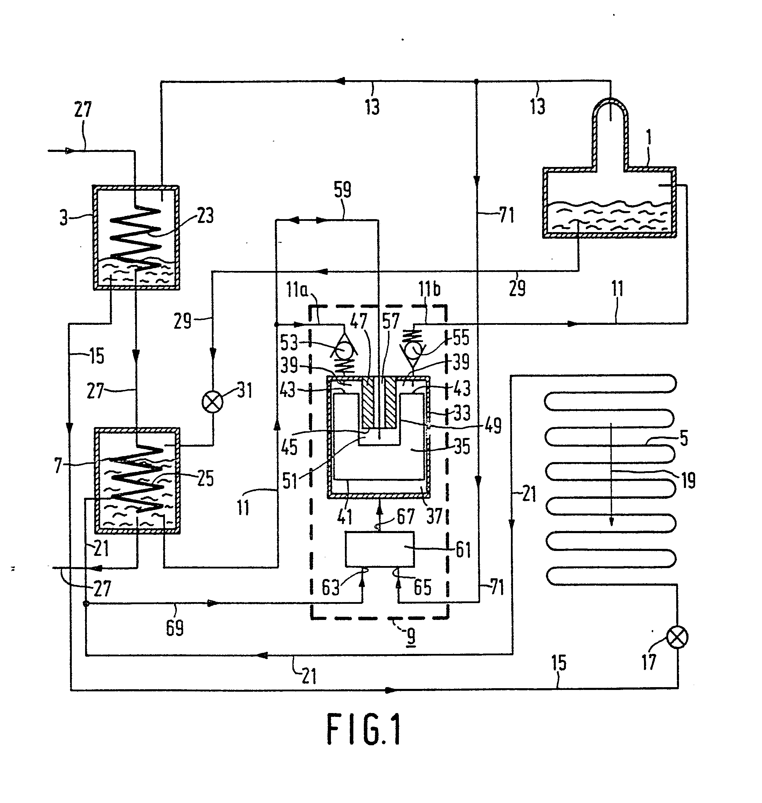

The heat pump shown in Figure 1 belongs to the category of absorption heat pumps comprising a first circuit in which a working medium, such as, for example, ammonia ($NH_3$), is conducted from a generator 1 successively to a condenser 3, an evaporator 5 and an absorber 7, and a second circuit in which an ammonia-depleted solution of ammonia in water is conducted from the generator 1 to the absorber 7 and an ammonia-enriched solution of ammonia in water is conducted from the absorber 7 to the generator 1. The transport of the rich solution from the absorber 7 to the generator 1 takes place by means of a liquid pump 9 which is interposed in a pipe 11 between the absorber 7 and the generator 1. The liquid pump 9 is indicated diagrammatically in Figure 1 by a dotted line. From the generator 1 gaseous ammonia is conducted through a pipe 13 to the condenser 3, in which it is condensed, after which it is conducted through a pipe 15 _via_ a thermostatic expansion valve 17 to the evaporator 5. By means of heat (arrow 19) extracted from the environment by the evaporator 5, the liquid ammonia evaporates in the evaporator 5 and is then conducted in the gaseous state through a pipe 21 to the absorber 7. The gaseous ammonia from the pipe 21 is dissolved in the absorber 7 in the solution of ammonia and water present therein so that a solution is formed which is rich in ammonia. The heat developed in the condenser 3 and in the absorber 7 is transferred by means of heat exchangers 23 and 25 to a heat-transporting medium, such as, for example, water, in a pipe system 27 which is connected to a load. From the generator 1 poor solution flows under the influence of the force of gravity to the absorber 7 arranged beneath the generator 1 _via_ a pipe 29 in which an expansion valve 31 is located. The poor hot solution in the pipe 29 and the rich cold solution in the lead 11 may be thermally coupled to each other by means of a counterflow heat exchanger. The hot liquid ammonia in the pipe 21 may also be thermally coupled to the cold gaseous ammonia by means of a heat exchanger directly downstream of the evaporator 5. For the sake of simplicity, the said heat exchangers are not shown in Figure 1.

It should be noted that the meaning of the term "heat pump" is to be understood also to include that kind of heat pump wherein the evaporator 5 of Figure 1 is replaced by a so-called "degaser" which takes up heat from the environment, whilst the condenser 3 of Figure 1 is replaced by a so-called "resorber" which gives off heat to the heat-transporting medium. From the degaser poor liquid solution is pumped by means of a second liquid pump to the resorber and is then enriched by the gaseous condensing ammonia from the generator. In such a heat pump, use is consequently made of two circuits with solution instead of the single circuit with solution in an absorption heat pump so that two liquid pumps 9 are required.

The part of the pipe 11 located between the pump 9 and the absorber 7 will be hereinafter termed "suction pipe 11a", whilst the part of the pipe 11 between the pump 9 and the generator 1 will be termed "delivery pipe 11b". Various embodiments of the pump 9 will be described below. In Figure 1, the common analogous parts of these various embodiments are denoted diagrammatically as far as possible by corresponding reference numerals.

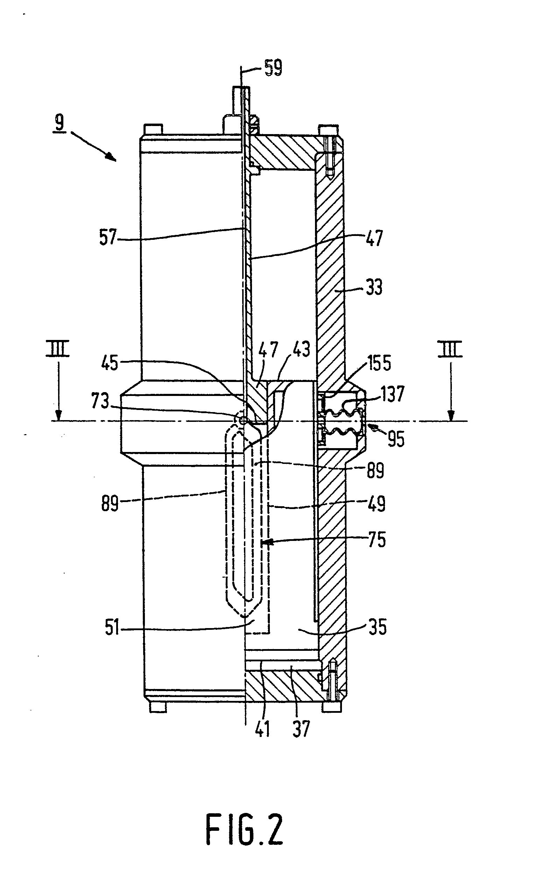

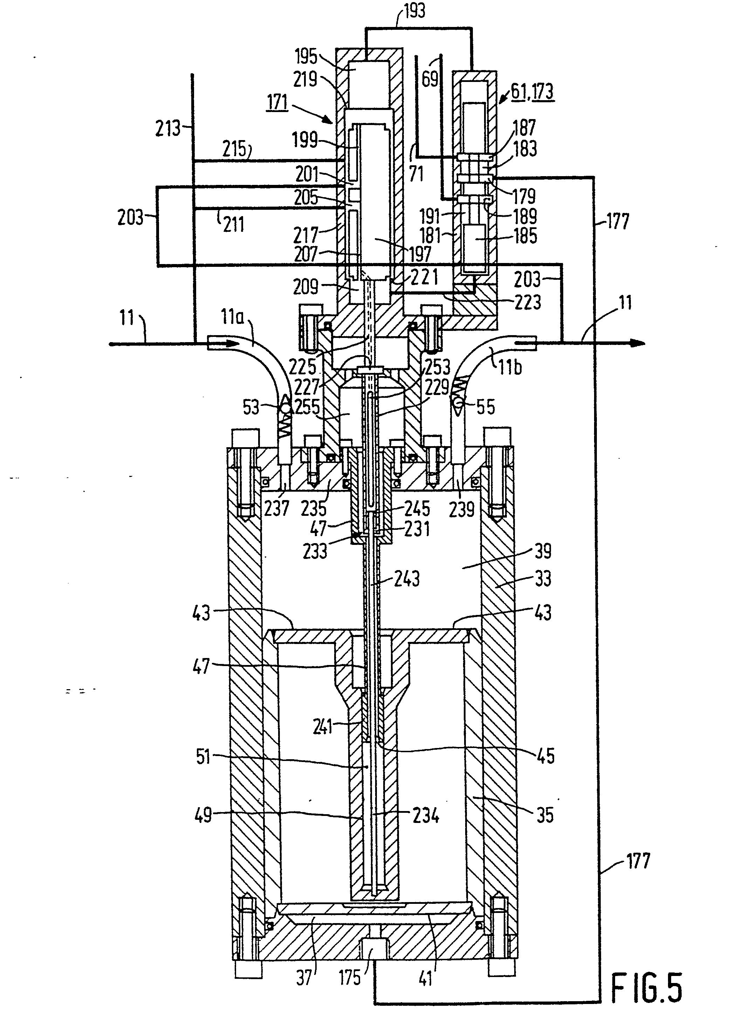

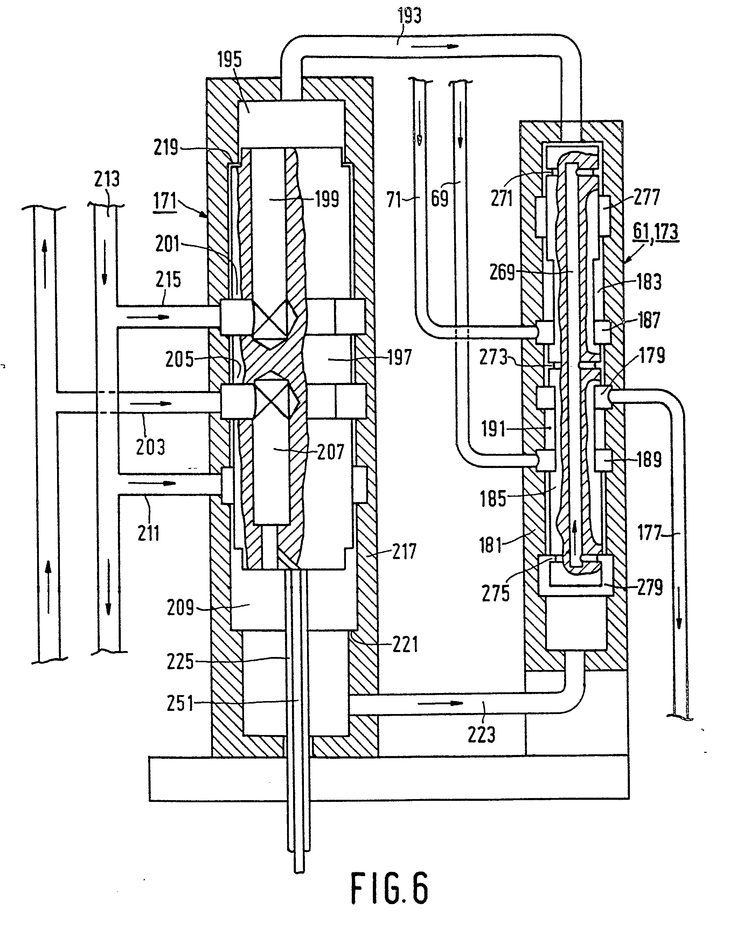

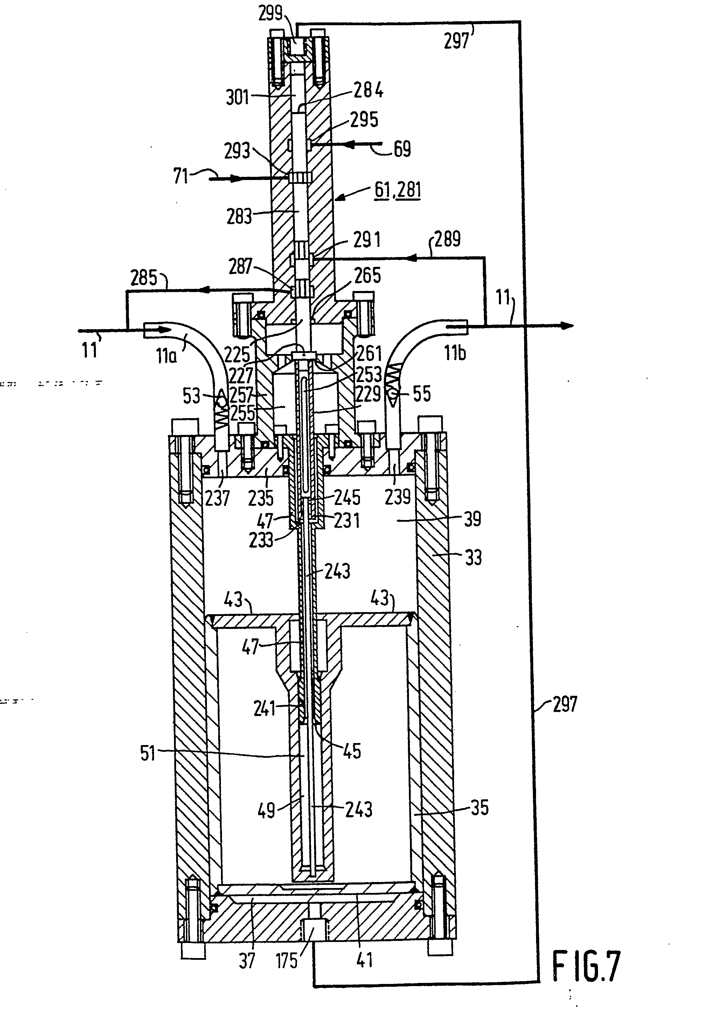

The pump 9 has a cylinder 33 of circular cross-section in which a cylindrical liquid piston 35 is displaceable in a reciprocatory manner. In the cylinder 33 there is provided a gas chamber 37 on one side of the piston 35 and a liquid chamber 39 on the other side of the piston 35. The piston 35 has a first working surface 41 which faces the gas chamber 37 and a second working surface 43 which faces the liquid chamber 39. Between an end face 45 of a cylindrical guide member 47, which is secured to the cylinder 33 and which fits roughly in a recess 49 in the piston 35, and the wall of the recess 49 there is provided an auxiliary chamber 51 having a variable volume in which liquid solution is constantly present. The suction pipe 11a is connected _via_ a non-return valve 53 to the liquid chamber 39, whilst the delivery pipe 11b is connected _via_ a non-return valve 55 to the liquid chamber 39. The non-return valves 53 and 55 operate, viewed in the direction of transport of the solution, in opposite directions, the non-return valve 53 serving as a suction valve and the non-return valve 55 serving as a delivery valve. The auxiliary chamber 51 is connected _via_ a bore 57 in the guide member 47 to a branch pipe 59 of the suction pipe 11a. Further, part of the pump 9 can be a gas change-over valve 61 having two inputs 63 and 65 and one output 67 which is connected to the liquid chamber 37. The output 63 is connected through a pipe 69 to the pipe 21, whilst the input 65 is connected through a pipe 71 to the pipe 13. As will be explained in more detail hereinafter with reference to the description of the various pump constructions, the gas change-over valve 61 in the embodiment of Figures 2, 3 and 4 is constituted by ports in the wall of the cylinder 33 in conjunction with a specific piston shape and piston movement (translational plus rotational), whilst the gas change-over valve 61 in the embodiment of Figures 5 and 6 can be recognized as a separate switching unit. Finally, in the embodiment of Figures 7, 8 and 9, gas change-over valve 61 is integrated with liquid change-over valve in the same housing into an integrated switching unit. The suction pipe 11a and the deliverly pipe 11b are constantly at a comparatively low and high pressure level, respectively, while the pipes 69 and 71 are also at a comparatively low and high pressure level, respectively. The operation of the absorption heat pump and liquid pump for an absorption heat pump, respectively, will now be described with reference to the various embodiments.

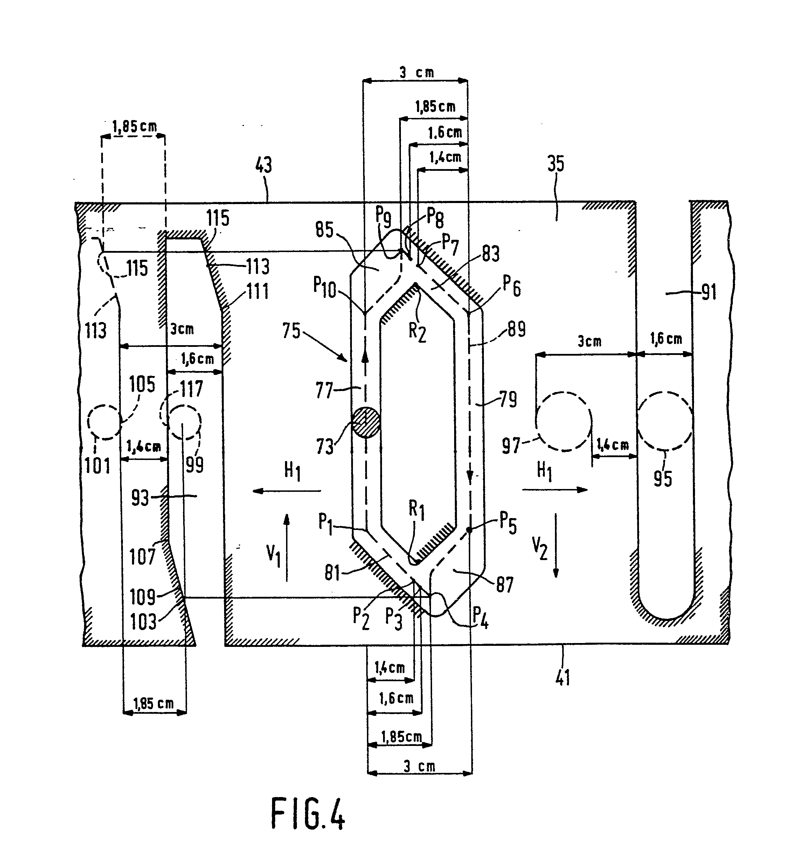

In the pump 9 shown in Figure 2, the auxiliary chamber 51 is connected through the bore 57 in the guide member 47 to the branch pipe 59, as shown in Figure 1. The pressure of the liquid solution in the auxiliary chamber 51 will therefore constantly be at a comparatively low level, i.e. approximately at the pressure level prevailing in the absorber 7. The gas chamber 37 is connected alternately to the pipe 21 (69) and the pipe 13 (71) so that in the gas chamber alternately approximately the low pressure level of the absorber 7 and the high pressure level of the generator 1 prevails. The liquid chamber 39 is alternately connected to the comparatively low pressure level of the suction pipe 11a during the suction stroke of the piston and to the comparatively high pressure level of the delivery pipe 11b during the delivery stroke of the piston. During the suction stroke a comparatively low pressure prevails on both sides of the piston 35, while during the delivery stroke a comparatively high pressure prevails on both sides of the piston. The pressure variation in the two chambers 39 and 41 is consequently synchronous. The change of pressure level in the chambers 39 and 41 is obtained in that besides the translatory movement also a rotary movement is imparted to the piston during a part of the suction stroke and a part of the delivery stroke. This will be explained more fully with reference to the developed view of the piston 35 in the plane of the drawing in Figure 4.

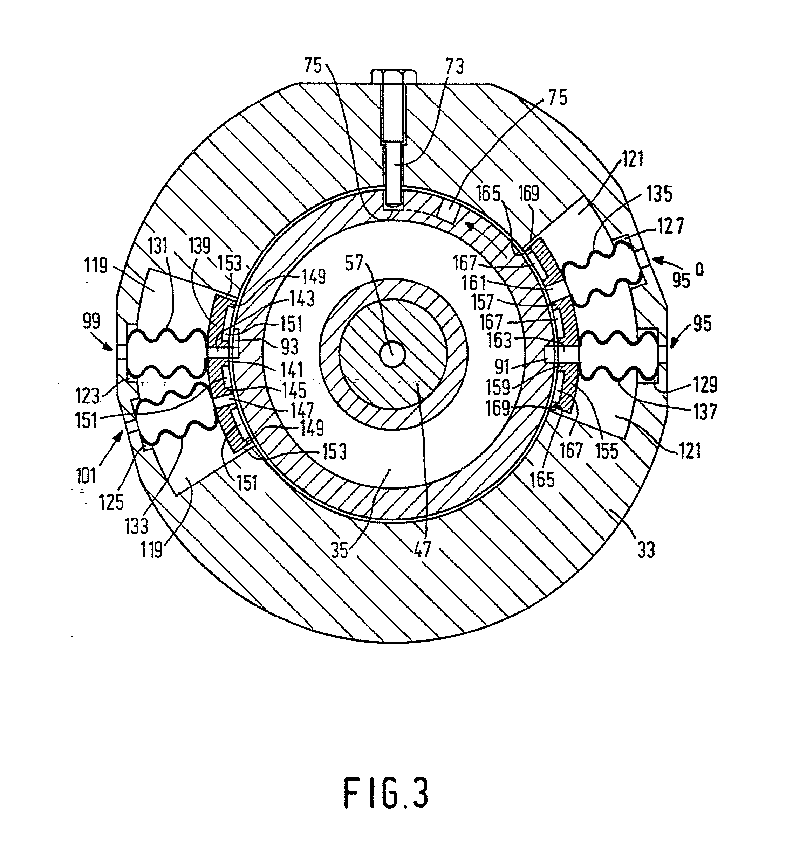

The cylinder 33 (see also Figure 3) is provided with a fixedly arranged pin 73 which in cooperation with a groove 75 in the piston 35 constitutes a guide for the piston 35. The groove 75 comprises two tracks 77 and 79 which are aparallel to the central longitudinal axis of the piston 35 and parallel tracks 81, 83 and 85, 87 which extend obliquely with respect to the central axis of the piston and which form with the tracks 77 and 79 a continuous curve. The tracks 81 and 87 and the tracks 83 and 85 enclose a right angle with each other in each case. In Figure 4, a dotted line 89 indicates the manner in which the piston 35 and the slot 75, respectively, move along the pin 73. The parts of the walls of the groove 75 which engage the pin 73 and indicated by a shading. Two gas ports and two liquid ports in the wall of the cylinder 33 are indicated by dotted lines. In Figure 4, gaseous working medium is constantly present beneath the first working surface 41 and liquid solution is constantly present above the second working surface 43. The piston 35 has a liquid duct 91 extending parallel to its central axis and a gas duct 93 extending parallel to its central axis. The liquid duct 91 forms during the delivery stroke the connection between the liquid chamber 39 located above the working surface 43 and a high-pressure liquid port 95 in the cylinder 33 and during the suction stroke the connection between the liquid chamber 39 and a low-pressure liquid port 97 in the cylinder 33. The direction of the piston movement during the delivery stroke and during the suction stroke is indicated by the arrows $V_1$ and $V_2$, respectively, in Figure 4. The high-pressure liquid port 95 is connected _via_ the delivery valve 55 (see Figure 1) to the delivery pipe 11b and the generator 1 during the delivery stroke, whilst the low-pressure liquid port 97 is connected _via_ the suction valve 53 to the suction pipe 11a and the absorber 7 during the suction stroke. The gas duct 93 forms during the delivery stroke the connection between the gas chamber 37 located beneath the working surface 41 and a high-pressure gas port 99 in the cylinder 33 and during the suction stroke the connection between the gas chamber 37 and a low-pressure gas port 101 in the cylinder 33. The high-pressure gas port 99 is connected _via_ the pipe 71 and the pipe 13 to the generator 1 during the delivery stroke, whilst the low-pressure gas port 101 is connected _via_ the pipe 69 to the pipe 21 downstream of the evaporator 5. In Figure 4, the most important dimensions in cms are indicated in order to illustrate the change from high-pressure to low-pressure ports and conversely.

In the situation shown in Figure 4, the piston is at the middle of its delivery stroke, moving in the direction of the arrow $V_1$. Gaseous working medium at high pressure is present beneath the piston 35 and liquid solution at substantially the same high pressure as that beneath the piston is present above the piston. The auxiliary chamber 51 (see also Figure 1) contains liquid solution at low pressure. The difference in surface area between the first working surface 41 and the second working surface 43 and the low pressure in the auxiliary chamber 51 produce an upwardly directed (in the direction of the arrow $V_1$) resultant force on the piston 35 during the delivery stroke. While the track 77 of the groove 75 is in engagement with the pin 73, the piston 35 performs a translational movement in the direction $V_1$. From the instant at which a point $P_1$ of the groove 75 coincides with the centre of the pin 73, the shaded side of the track 81 will engage the pin 73 so that the piston 35 performs in conjunction with the translational movement $V_1$ a rotational movement in the direction $H_1$. As a result, the liquid duct 91 is displaced to the left over a distance of 1.4 cm until the point $P_2$ of the groove 75 coincides with the centre of the pin 73. At that instant the high-pressure liquid port 95 is not yet cut off completely from the liquid duct 91 and the low-pressure liquid port 97 is not yet connected to the liquid duct. There is still an overlap corresponding to 0.2 cm in Figure 4. In the trajectory corresponding to $P_2 - P_3$ (0.2 cm displacement to the left), the high-pressure liquid port 95 is consequently connected through the liquid duct 91 to the low-pressure liquid port 97 so that a small quantity of solution flows to the absorber 7. Also due to the decreasing volume of the auxiliary chamber 51, a small quantity of liquid solution flows to the absorber 7. The said quantities of solution are of minor importance and are taken up in the absorber 7 again in the second circuit. Because the distance between a point 103 of the gas duct 93 and a point 105 of the low-pressure gas port 101 is 1.85 cm,

for the point $P_3$ the gas duct 93 is not yet connected to the low-pressure gas port 101 but is still connected to the high-pressure gas port 99. Whereas due to the short-circuit between the liquid ports 95 and 97 the pressure on the liquid side of the piston 35 decreases rapidly, the gaseous working medium on the gas side of the piston 35, which still is at high pressure, can expand in the expanding gas chamber 37. Thus, the trajectory $P_2$-$P_3$-$P_4$ can be bridged by the piston 35 and a first reversal point $R_1$ can be passed. The gas duct 93 is provided beyond a first bending point 107 with a first oblique edge 109. This oblique edge 109 has two effects. In the first place, it results in the change-over of the gas ports 99, 101 at the end of the delivery stroke lagging behind the change of the liquid ports 95, 97. As a result, the expansion of the gaseous working medium in the gas chamber 37 can be utilized to bridge the trajectory $P_2$-$P_3$-$P_4$. Due to the oblique edge 109, this lag can take place at an equal distance of in Figure 4 1.4 cm between the liquid ports and the gas ports. The distance which has to be covered by the piston 35 in the direction $H_1$ before, by vertical displacement in the direction $V_1$, the point 103 on the oblique edge 109 coincides with the point 105 of the low-pressure gas port 101, is in fact 1.85 cm. This distance of 1.85 cm is also equal to the distance projected in the horizontal direction between the points $P_1$ and $P_4$. In the second place, as a result of the oblique edge 109 the low-pressure gas port 101 opens rapidly in the trajectory $P_4$-$P_5$ so that the track 87 rapidly passes the pin 73 and therefore the change-over of ports is rapidly terminated. Due to the oblique form of the edge 109, the gas port 101 opens comparatively more rapidly than in the case of a fully straight gas duct. Dwelling at dead centres during the reversal of the movement of the piston is thus avoided. At the point $P_4$ the reversal of the movement of the piston takes place and the shaded side of the track 87 engages the pin 73. The low-pressure gas port 101 is opened rapidly in the trajectory $P_4$-$P_5$ which already belongs to the suction stroke. In the point $P_5$ the rotational movement (corresponding to $H_1$) of the piston starting at the point $P_1$ is terminated. Subsequently, during the suction stroke the track 79 is in engagement with the pin 73 in a downward movement of the piston. The trajectory $P_5$-$P_6$ represents a pure translational movement of the piston, while the trajectory

$P_1-P_5$ represents a combined translational and rotational movement. In the trajectory $P_1-P_5$ the rotational movement invariably takes place in the same direction, whilst the translational movement is directed upwards ($V_1$) for the trajectory $P_1-P_4$ (delivery stroke) and downwards ($V_2$) for the trajectory $P_4-P_5$. At the instant at which the point $P_6$ of the groove 75 coincides with the centre of the pin 73, a rotational movement of the piston is started with a continued translational movement. This rotational movement is opposite to the rotational movement in the trajectory $P_1-P_5$ and leads to a displacement in the direction $H_2$ in Figure 4. The shaded side of the track 83 is now in engagement with the pin 73. At the point $P_7$, after a displacement of 1.4 cm of the piston to the right, the high-pressure liquid port 95 starts to open. Because of the overlap of 0.2 cm, the low-pressure liquid port 97 is still open during the trajectory $P_7-P_8$ and short-circuited with the high-pressure liquid port 95 so that the pressure in the liquid chamber 39 already increases before the high-pressure gas port 99 is opened. Further, a small quantity of solution leaks _via_ the low-pressure liquid port 97 away to the absorber 7. The gaseous working medium still at low pressure in the gas chamber 37 is compressed by the increasing pressure in the liquid chamber. This results in the trajectory $P_7-P_8-P_9$ being bridged and a second point of reversal $R_2$ is passed. The gas duct 93 is provided beyond a second bending point 111 with a second oblique edge 113. Like the first oblique edge 109, the second oblique edge 113 also has the effect that also at the end of the suction stroke the change-over of the gas ports 101, 99 lags behind the change of the liquid ports 97, 95. The distance which has to be covered by the piston in the direction $H_2$ before, by vertical displacement in the direction $V_2$, a point 115 on the oblique edge 113 (from the dotted position) coincides with a point 117 of the high-pressure gas port 99, is again 1.85 cm. This distance of 1.85 cm is equal to the distance projected in the horizontal direction between the points $P_6$ and $P_9$. The oblique edge 113 also leads to a rapid opening of the high-pressure gas port 99 in the trajectory $P_9-P_{10}$. At the point $P_{10}$ the high-pressure gas port 99 is completely opened. The shaded side of the track 85 is in engagement with the pin 73 during the beginning of the new delivery stroke which starts at the point $P_9$ and which in the tra-

jectory $P_9$-$P_{10}$ still takes place with a not completely opened high-pressure gas port 99 and with a combined translational (direction $V_1$) and rotational (corresponding to $H_2$) movement of the piston.

It should be noted that during the suction stroke in the trajectory $P_4$-$P_9$ a low pressure prevails both in the liquid chamber 39 and in the gas chamber 37. The auxiliary chamber 51 contains liquid solution at low pressure. The movement of the piston is now obtained by the weight of the piston and the weight of the liquid solution sucked into the liquid chamber 39 from the absorber 7. Alternatively, a spring may be used which is tensioned during the delivery stroke and is released during the suction stroke and which exerts a downwardly directed force on the piston. Further, if desired in conjunction with a spring, a liquid change-over valve may be used which admits liquid at low pressure into the auxiliary chamber 51 during the delivery stroke and admits liquid at high pressure into this chamber during the suction stroke. Such a valve is used, for example, in the embodiment of Figure 5. It may further be stated that during the delivery stroke the pressures in the liquid chamber 39 and in the gas chamber 37 are substantially equal to each other. The pressure of the liquid solution in the liquid chamber 39 is only about 1 % higher than the pressure in the gaseous working medium in the gas chamber 37 due to flow resistances in the delivery pipe 11b, 11 and a pump height between the pump 9 and the generator 1 (see Figure 1). The pressure of the gaseous working medium in the gas chamber 37 is about 10 % higher than the pressure of the liquid solution in the liquid chamber 39 during the suction stroke. However, both pressures are comparatively low. The difference is due to flow losses in the suction pipe 11a,11. In a practical embodiment of an absorption heat pump containing a solution of ammonia ($NH_3$) and water, the pressures in the liquid chamber 39 and in the gas chamber 37 during the delivery stroke were 20.3 $N/m^2$ and 20 $N/m^2$, respectively, and during the suction stroke 1.7 $N/m^2$ and 2 $N/m^2$, respectively.

Although due to the synchronous occurrence of high or low pressures on either side of the piston there is no necessity to provide a seal around the circumference of the piston, under given circumstances a leakage of gas may occur from the high-pressure gas port 99 to the low-pressure gas port 101 and a leakage of liquid may occur from the high-pressure liquid port 95 to the low-pressure liquid port 97. In order to reduce or avoid the risk of the occurrence of such a leakage, a local seal is preferably provided between the two gas ports and a local seal between the two liquid ports. The construction of the seal is explained in Figure 3 with reference to a preferred embodiment. Although Figure 3 is a sectional view taken on the line III-III in Figure 2, the piston is shown in Figure 2 at the beginning of the delivery stroke and in Figure 3 at the instant at which the delivery stroke has already advanced so far that the pin 73 is situated in a vertical track of the groove 75. It should be noted that the developed view of the piston in Figure 4 geometrically does not correspond to Figures 2 and 3, but it is provided with corresponding reference numerals.

In the wall of the cylinder 33 there are formed two rectangular chambers 119 and 121 each having two circular recesses 123, 125 and 127, 129, respectively in its back wall. The recesses 123 and 125 serve to center two elastic bellows 131 and 133 in the chamber 119, whilst the recesses 127 and 129 serve to center two elastic bellows 135 and 137 in the chamber 121. The chamber 119 accommodates a rectangular slipper 139, which is lightly biased by the bellows 131 and 133 against the piston 35. The surface of engagement of the slipper against the piston is constituted by a raised annular edge 141 around an opening 143 in the slipper 139 and a raised annular edge 145 around an opening 147 in the slipper 139. The edges 141 and 145 have a comparatively small width of, for example, 1 mm. The openings 143 and 147 are connected via the interior of the bellows 131 and 133 to the high-pressure gas port 99 and to the low-pressure gas port 101, respectively. The slipper 139 further has a rectangular raised outer edge 149. Between this outer edge 149 and the edges 141 and 145 a shallow recess 151 is formed in the slipper 139. Further, a gap 153 is intentionally left between the walls of the rectangular chamber 119 and the periphery of the rectangular slipper 139. The edges 141 and 145 are under all conditions in sealing engagement with the piston 35 because the small width of the edges does not offer a possibility of a build-up (accumulation) of pressure between the edges and the piston. The gap 153 further ensures that equal pressures prevail at the front and back of the slipper 139. Consequently, there is no possibility of the slipper 139 being pressed radially outwards and the seal at
the edges 141 and 145 being lost. In a manner analogous to that in
the gas ports 99 and 101, a reliable seal is also guaranteed in the
liquid ports 95 and 97. A rectangular slipper 155 having raised
annular edges 157 and 159 locally surrounding openings 161 and 163
in the slipper 155 is lightly biased against the piston 35 by the
bellows 135 and 137. Between a raised outer edge 165 of the slipper
155 and the edges 157 and 159 there is formed a shallow recess 167.
A gap 169 is left between the walls of the chamber 121 and the
periphery of the slipper 155. The openings 161 and 163 are connected
via the interior of the bellows 135 and 137 to the low-pressure
liquid port 97 and the high-pressure liquid port 95, respectively.
In the situation shown in Figure 4, the gas duct 93 in the piston
35 is in open communication with the high-pressure gas port 99,
whilst the liquid duct 91 is in open communication with the high-
pressure liquid port 95.

It has been described with reference to Figure 4 that the
lag of the change-over of the gas ports 99, 101 behind the change-
over of the liquid ports 95, 97 was obtained by means of the oblique
edges 109 and 113 of the gas duct 93. This lag can also be obtained
by means of a straight gas duct 93 having parallel edges throughout
its length if the distance between the gas ports is larger than the
distance between the liquid ports. Further, the lag can be obtained
by giving the gas duct 93 and the liquid duct 91 different widths.

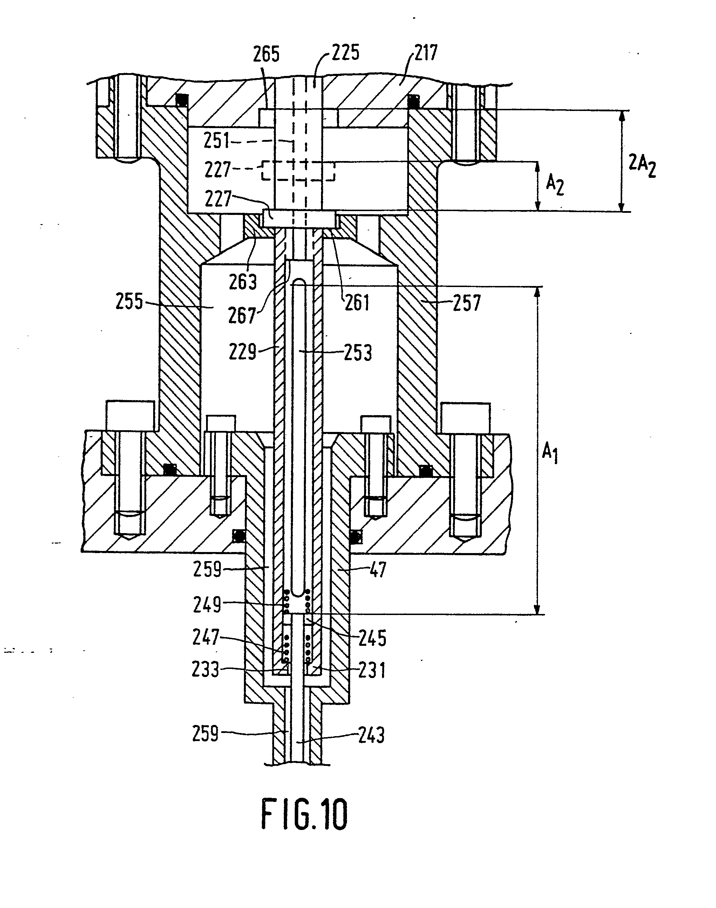

In the further embodiment of a liquid pump for a heat
pump shown in Figure 5, a rotational movement of the piston is not
utilized for the change of the pressure on either side of the piston
35. The piston 35 in Figure 5 performs only a translatory movement.
The change-over of the ports is effected by means of a combination o.
a separate liquid change-over valve 171 and a separate gas change-
over valve 61 (see also Figure 1) 173, the gas change-over valve 61,
173 being controlled by the liquid change-over valve 171. Since the
ports of the liquid pump shown in Figure 5 are arranged in a configuration different from that of the ports in the pump shown in
Figure 2 and since the pump of Figure 5 moreover accomodates only
a single gas port, corresponding reference numerals are not used.
This is in contrast with the liquid pumps shown in Figures 5 and 7.
In the situation shown in Figure 5, the piston 35 is just at the beginning of the delivery stroke. The liquid chamber 39 is filled with liquid solution in which the delivery pressure is built up. At the instant at which the pressure in the solution in the liquid chamber 39 has exceeded the pressure in the delivery pipe 11b by an amount which is equal to the low spring tension (bias) of the spring-loaded delivery valve 55, the delivery valve 55 opens and solution is pumped via the pipe 11b, 11 to the generator 1 (see Figure 1). During the delivery stroke, gaseous working medium at a comparatively high pressure is present in the gas chamber 37. This working medium is supplied via a gas port 175 which is connected to a pipe 177. The gas port 175 serves at the same time for supplying gaseous working medium at a comparatively low pressure during the suction stroke. In the situation shown, the pipe 177 is connected via an annular chamber 179 in a housing 181 of the gas change-over valve 173, an annular recess 183 in a change-over slide 185 of the gas change-over valve 173 and an annular chamber 187 in the housing 181, to the high-pressure gas pipe 71 (see also Figure 1). The housing 181 is further provided with an annular chamber 189, whilst the valve slide 185 is further provided with an annular recess 191. The annular chamber 189 is connected to the low-pressure gas pipe 69 (see also Figure 1). The space above the valve slide 185 contains during the delivery stroke liquid solution at high pressure, which is supplied through a pipe 193 which is connected to a space 195 above the change-over slide 197 of the liquid change-over valve 171. Both the slide 197 and the slide 185 have substantially equal working areas at both ends. The space 195 is connected by means of a duct 199 and a transverse bore 201 in the valve slide 197 to a pipe 203, which branches from the delivery pipe 11b. The slide 197 of the liquid change-over valve 171 is further provided with a transverse bore 205, which is connected via a duct 207 to a space 209 beneath the valve slide 197. The space 209 is connected via the duct 207 and the transverse bore 205 to a pipe 211, which branches from a pipe 213 which is connected to the suction pipe 11a. The pipe 213 has a further branch in the form of a pipe 215, which in the situation shown is closed by the valve slide 197. The valve slide 197 is displaceable in a reciprocatory manner in a housing 217 between two end positions which are determined by two shoulders 219 and 221 formed on the wall of the housing 217. The space 209 is further connected through a pipe 223 to the space beneath the slide 185 of the gas change-over valve 173. Consequently, liquid solution at low pressure is present beneath the valve slide 185 and the valve slide 197. The change from delivery stroke to suction stroke and so from high to low pressure on either side of the piston will be explained with reference to Figures 5, 6 and 10, whereby it should be noted that the liquid and gas change-over valves shown in detail in Figure 6 are illustrated in the position corresponding to the suction stroke, while Figures 5 and 10 relate to the piston position corresponding to the delivery stroke.

It is further stated that during the delivery stroke the auxiliary chamber 51 contains liquid solution at low pressure, which originates from the suction pipe 11a through a duct system which is described with reference to the description of the change-over from the delivery stroke to the suction stroke.

The slide 197 of the liquid change-over valve 171 is secured to a guide rod 225 having a collar 227 at its end remote from the slide 197. The guide rod 225 has screwed onto it a tube 229 which has at its end remote from the collor 227 an end wall 231 with a guide opening 233. The cylinder 33 is provided with a cover plate 235 in which are formed a low-pressure liquid port 237 and a high-pressure liquid port 239. The cover plate 235 has secured to it the hollow guide member 47 for the piston 35. At its end which is adjacent the piston 35 the guide member 47 has an enlarged part 241 fitting in the recess 49 in the piston. A follower rod 243 secured to the piston 35 is slidably guided in the guide opening 233 of the tube 229. The end of the follower rod 243 remote from the piston 35 is provided with a collar 245 which is slidably guided in the tube 229. Between the lower side of the collar 245 and the end wall 231 is a compression spring 247, which is loosely arranged in the tube 229. A loose compression spring 249 (see Figure 10) is likewise arranged on top of the shoulder 245. The operation of the compression springs 247 and 249 will be explained below more fully. The duct 207 in the slide 197 of the liquid change-over valve 171, which is alternately connected to the high-pressure liquid pipe 203 and to the low-pressure liquid pipe 211, is connected to a duct 251 in the guide rod 225, which duct is in open communication with the tube 229. The tube 229 is provided with a longitudinal slot 253, through which the liquid can pass to a chamber 255 in a cylindrical support 257 for the change-over valves 171 and 173. By means of a clearance space 259 between the wall of the guide member 47 and the tube 229 and the follower rod 243, the chamber 255 is connected to the auxiliary chamber 51. In fact, the space 209 beneath the valve slide 197 (see Figure 5) is consequently in open communication with the auxiliary chamber 51. The collar 227 on the guide rod 225 alternately engages an abutment stop 261 in a bridge section 263 of the chamber 255 and an abutment stop 265 on the lower side of the housing 217 of the liquid change-over valve 171.

After the piston has been displaced upwards from the lowermost position over a distance $A_1$ (see Figure 10), the upper side of the compression spring 249 engages an end face 267 of the guide rod 225. Since at that instant a low pressure prevails beneath the valve slide 197 and a high pressure prevails above the valve slide 197 the latter is in the position shown in Figure 5. The compression spring 249 is now compressed until the spring force is equal to the downwardly directed force on the valve slide 197. Subsequently, the slide 197 is displaced upwards until the collar 227 has reached the position indicated by a dotted line in Figure 10. The distance covered by the piston in the upward direction is at that instant $A_1 + A_2$ plus the compression of the spring 249, the distance $A_2$ being equal to half the stroke of the valve slide 197. At the instant at which the valve slide 197 has been displaced over the distance $A_2$ in the upward direction, the pressure difference across the slide 197 is eliminated due to the fact that the liquid ports 201 and 205 no longer register with any of the pipes 203, 211 and 215. The compression spring 249 can be released in this situation and drives the valve slide beyond its central position. The pressure difference again present across the valve slide 197 after the central position of the slide causes the latter to reach the final position, in which the collar 227 engages the abutment stop 265. The end of the delivery stroke is now reached with a distance $A_1 + 2A_2$ covered by the piston. The valve slide 197 now occupies the position shown in Figure 6, which corresponds to the (beginning) suction stroke, the duct 199 and the space 195 being connected to the low-pressure liquid pipe 215 _via_ the liquid port 201, while the duct 207 and the space 209 are connected _via_

the liquid port 205 to the high-pressure liquid pipe 203. This also means that high pressure is produced beneath the slide 185 of the gas change-over valve 173 via the pipe 223, whilst low pressure is produced above the valve slide 185 via the pipe 193 so that the valve slide 185 is displaced from the position shown in Figure 5 to the position shown in Figure 6. A pressure change of the liquid solution from low pressure to high pressure takes place in the auxiliary chamber 51 via the duct 251 in the guide rod 225 connected to the duct 207. The suction stroke now beginning is performed in a similar manner to the delivery stroke described above, except that at the end of the suction stroke the compression spring 247 beneath the collar 245 serves for changing-over the liquid ports.

The gas change-over valve 173 is provided with means which under all conditions prevent gaseous working medium leaking from high-pressure ports and spaces to low-pressure ports and spaces. For this a liquid seal is used. This liquid seal is illustrated in Figure 6, in which the slide 185 of the gas change-over valve 173 is in a position corresponding to the suction stroke with liquid solution of high pressure beneath and liquid solution of low pressure above the slide. The slide 185 is provided with a duct 269 which extends along the central longitudinal axis of the slide and is connected through radial bores to three annular recesses 271, 273, 275 in the slide 185. The housing 181 of the gas change-over valve 173 has a cylindrical chamber 277 in the proximity of the upper end of the housing and a cylindrical chamber 279 in the proximity of the lower end. The diameter of the circular-cylindrical chambers 277 and 279 is larger than the diameter of the valve slide 185 and the inner diameter of the housing 181. Viewed in the longitudinal direction of the valve 173, the chambers 277 and 279 are positioned so that near the end of the delivery stroke in Figure 6 (beginning suction stroke) the chamber 279 forms the connection between the pipe 223 with high-pressure liquid and the duct 269, whilst near the end of the suction stroke (beginning delivery stroke) the chamber 277 forms the connection between the pipe 193 with high-pressure liquid and the duct 269. In the situation shown in Figure 6, at the end of the delivery stroke, liquid flows at high pressure via the chamber 279 into the duct 269 and thence to the annular recesses 271, 273 and 275. The gap between the inner wall of the housing 181 and the valve slide 185 is therefore filled between the annular chambers 187 and 179 with high-pressure liquid, which forms a seal between the high-pressure gas in the pipe 71 and the low-pressure gas in the pipe 177. A seal is formed between the high-pressure gas in the pipe 71 and the low-pressure liquid in the pipe 193 by the high-pressure liquid supplied <u>via</u> the annular recess 271 in the gap near the upper end of the valve slide 185. In the situation when the valve slide 185 is located in the lower part of the housing 181, the seal is similar to the seal already described. The high-pressure sealing liquid is then supplied through the chamber 277.

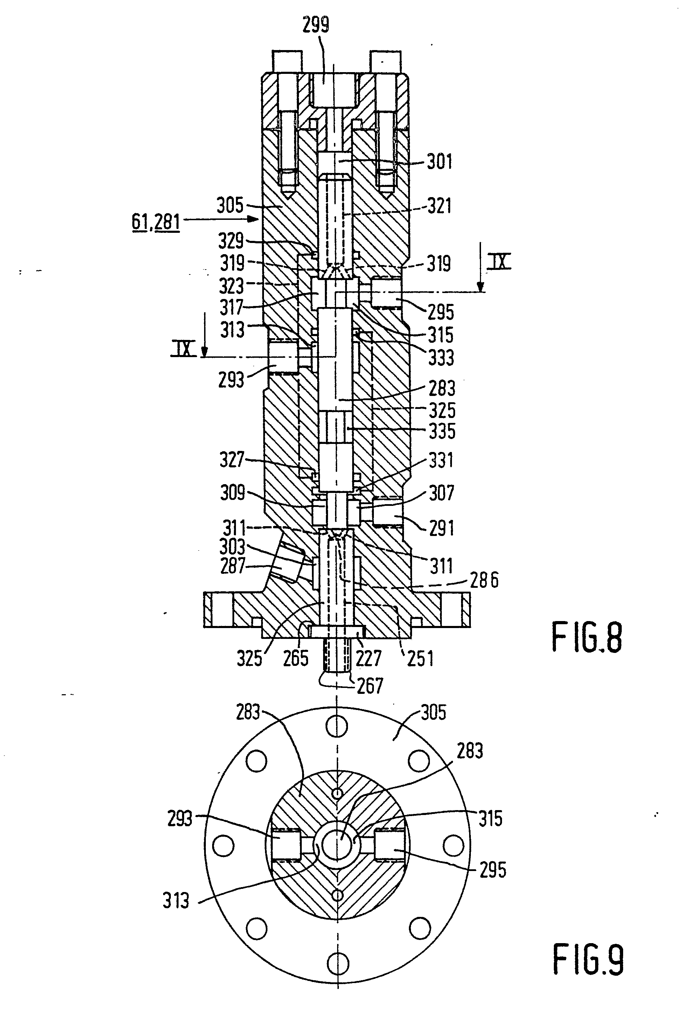

In the preferred embodiment of a liquid pump used in a heat pump shown in Figures 7, 8 and 9, the liquid change-over valve 171 and the gas change-over valve 173 of Figure 6 are integrated to form a combined liquid/gas change-over valve 281 having a single common slide 283 provided with end surfaces 284 and 286 having equal working areas. Apart from the construction of the change-over valve 281, the liquid pump of Figure 7 is similar to the liquid pump of Figure 5. Figure 10 therefore also relates to the liquid pump of Figure 7. In Figures 7 and 10, the situation at the beginning of the delivery stroke is shown, while Figure 8 shows the situation at the beginning of the suction stroke. As is shown in Figure 7, a pipe 285 branching from the suction pipe 11a is connected to a low-pressure liquid port 287, whilst a pipe 289 branching from the delivery pipe 11b is connected to a high-pressure liquid port 291. Further, a high-pressure gas port 293 is connected to the pipe 71, whilst a low-pressure gas port 295 is connected to the pipe 69 (see also Figure 1). The gas port 175 in the cylinder 35 is connected through a pipe 297 to a gas port 299 in the valve 281, which is connected to a space 301 above the valve slide 283. In the valve 281, gas (working medium) is constantly present above the slide 283 and liquid (solution) is constantly present beneath the slide. The change-over from the delivery stroke to the suction stroke is effected in the same manner as described already with reference to Figure 10 for the liquid pump of Figure 5. By means of the valve 281 shown on an enlarged scale in Figure 8, the course of the gas and liquid flows will be illustrated. Figure 8 shows the situation at the beginning of the suction stroke.

The low-pressure liquid port 287 is connected to an annular chamber 303 which is formed in the inner surface of the wall of a housing 305 of the change-over valve 281. In the situation shown, the low-pressure liquid port 287 is blocked by the slide 283. The high-pressure liquid port 291 is connected through an annular chamber 307 in the housing 305 and an annular recess 309 in the valve slide 283 to the lower side of the slide. Also, the high-pressure liquid port 291 is connected through bores 311 to the duct 251 in the guide rod 225 so that high pressure also prevails in the auxiliary chamber 51 during the suction stroke. Further, the high-pressure gas port 293 is connected to an annular chamber 313 in the housing 305. The gas port 293 is blocked by the valve slide 283. The low-pressure gas port 295, via in succession an annular chamber 315 in the housing 305, an annular recess 317 in the valve slide 283, bores 319 and a duct 321 in the slide 283, is in open communication with the space 301 above the valve slide. In the valve slide 283 two ducts 323 and 325 extend parallel to the central longitudinal axis of the valve slide. The duct 323 is connected to two annular chambers 327 and 329 in the housing 305, whilst the ducts 325 is connected to two annular chambers 331 and 333 in the housing 305. The valve slide 283 is further provided with an annular recess 335, which is located between the annular recesses 309 and 317. In the situation shown, liquid is supplied through the high-pressure liquid port 291 to the annular chamber 331 and thence via the duct 325 to the annular chamber 333. This means that high-pressure liquid in the gap (not illustrated in Figure 8) between the housing 305 and the valve slide 283 will serve as a seal between the high-pressure gas port 293 (chamber 313) and the low-pressure gas port 295 (chamber 315). The position and the dimensions of the annular recess 335 located between the annular recesses 309 and 317 with respect to the stroke length of the valve slide 283 are such that, when the slide 283 is in the delivery position, the recess 335 connects the high-pressure liquid port 291 and the annular chambers 327 and 331 to each other. The result of this is that during a delivery stroke both ducts 223 and 325 contain liquid at high pressure so that high-pressure liquid will serve as a seal between the space 301 and the low-pressure gas port 295 via the chamber 329 and between the high-pressure gas port 293 and the low-pressure gas port 295 _via_ the chamber 333.

The heat pump and the liquid pump are not limited to the embodiments described. For example, it is possible to obtain the rotational movement of the piston by means of permanent magnets in the piston and the cylinder which attract or repel each other near the end of the delivery stroke and the suction stroke. The pin-and-groove guid means is then not necessary. Each of the bellows may be arranged in a separate chamber. The gas duct and the liquid duct are connected in this case _via_ one or more of a large number of transverse bores in the piston to the interior of the bellows. The transverse bores form a row which extends parallel to the gas duct or the liquid duct.

The change-over from the delivery stroke to the suction stroke or conversely may be effected by means of a pneumatic valve comprising a so-called snap-action spring. The change-over takes place in a comparatively short time due to the snap effect of the snap-action spring.

Between the piston and the guide member in the auxiliary chamber there may be arranged a spring which is depressed during the delivery stroke and is released during the suction stroke. Such a spring may also be arranged in the liquid chamber between the piston and the cylinder.

CLAIMS

1.        A heat pump comprising a first circuit in which a working medium is conducted from a generator successively to a condenser, an evaporator and an absorber and a second circuit in which a solution of the working medium and a solvent which is comparatively poor in working medium content is conducted from the generator to the absorber and a solution of the working medium and a solvent which is comparatively rich in working medium content is conducted from the absorber to the generator, the transport of the rich solution from the absorber to the generator taking place by means of a liquid pump arranged in a connection between the absorber and the generator and having a liquid piston which is displaceable in a cylinder in a reciprocatory manner and whose movement is reversible by means of a gas change-over valve which alternately connects a working surface of the liquid piston to gaseous working medium in the heat pump at a comparatively low and at a comparatively high pressure level, characterized in that said working surface constitutes a first working surface of the liquid piston facing a gas chamber located in the cylinder, which piston further has a second working surface which faces a liquid chamber located in the cylinder and which is smaller than the first working surface and is separated therefrom by the liquid piston, the gas chamber being connected to the gaseous working medium in the heat pump alternately at a comparatively low and high pressure level, whilst synchronously therewith the liquid chamber is connected to the liquid solution in the heat pump alternately at a comparatively low and a comparatively high pressure level, and the cylinder being provided with a guide member for the piston which guide member is arranged in the liquid chamber and extends into a recess in the piston, whilst an end face of the guide member defines with the recess an auxiliary chamber having a variable volume of liquid solution, whose pressure level at least during the delivery stroke of the liquid piston is substantially equal to the low pressure level of the liquid solution in the heat pump.

2.        A heat pump as claimed in Claim 1, characterized in that the piston is provided with a gas duct which after rotational movement of the piston in a first direction during the suction stroke forms a connection between the gas chamber and a low-pressure gas port in the cylinder, and with a liquid duct which after rotational movement of the piston in the first direction during the suction stroke forms a connection between the liquid chamber and a low-pressure liquid port in the cylinder, whilst after rotational movement of the piston in a second direction opposite to the first direction the gas duct in the piston forms a connection between the gas chamber and a high-pressure gas port in the cylinder and the liquid duct in the piston forms a connection between the liquid chamber and a high-pressure liquid port in the cylinder.

3.        A heat pump as claimed in Claim 2, characterized in that the cylinder is provided with a fixedly arranged pin which in cooperation with a groove in the piston constitutes a guide for the piston, the groove having the form of a continuous curve comprising two tracks which are parallel to the central longitudinal axis of the piston and are interconnected by tracks extending obliquely with respect to said axis.

4.        A heat pump as claimed in Claim 2 or 3, characterized in that the cylinder is provided with two sealing edges for the high-pressure gas port and the low-pressure gas port, respectively, which edges are pressed against the piston by an elastic bellows, and with two sealing edges for the high-pressure liquid port and the low-pressure liquid port, respectively, which edges are pressed against the piston by an elastic bellows, the bellows associated with the gas ports forming a connection between the relevant gas port and the gas duct in the piston, and the bellows associated with the liquid ports forming a connection between the relevant liquid port and the liquid duct in the piston.

5.        A heat pump as claimed in Claim 1, characterized in that the gas chamber is connected by means of the gas change-over valve to gaseous working medium in the heat pump alternately at a comparatively low and a comparatively high pressure, whilst synchronously therewith the liquid chamber is connected by means of a liquid change-over valve to liquid solution in the heat pump alternately at a comparatively low and a comparatively high pressure.

6. A heat pump as claimed in Claim 5, characterized in that an integrated unit with a liquid change-over valve and a gas change-over valve comprises a common valve slide displaceable in a housing in a reciprocatory manner and having two operative positions, whereby in a first operative position corresponding to the beginning of the suction stroke a connection is formed by means of a first recess in the valve slide between a first gas port in the housing at a comparatively low pressure level and a first working surface of the valve slide and a connection is formed by means of a second recess in the valve slide between a first liquid port in the housing at a comparatively high pressure level and a second working surface of the valve slide located opposite to the first working surface and to the said auxiliary chamber, whilst in a second operative position corresponding to the beginning of the delivery stroke a connection is formed by means of the first recess between a second gas port in the housing at a comparatively high pressure level and the first working surface and a connection is formed by means of the second recess between a second liquid port in the housing at a comparatively low pressure level and the second working surface and to said auxiliary chamber.

7. A heat pump as claimed in Claim 5 or 6, characterized in that a valve slide of the liquid switch or of the integrated unit with the liquid and gas change-over valves is mechanically coupled during a part of the suction stroke and the delivery stroke by means of a first spring and a second spring, respectively, to a follower rod which is secured to the piston and is arranged coaxially with the valve slide and with the piston and is freely displaceable with respect to the follower rod during another part of the suction stroke and the delivery stroke.

8. A heat pump as claimed in Claim 5 or 6, characterized in that the gas change-over valve or in the integrated unit with the liquid and gas change-over valves, respectively, ports and spaces at comparatively high and comparatively low gas pressure are separated from each other by a sealing liquid of comparatively high pressure which is supplied through a duct system in the housing and the valve slide.

9. A liquid pump for use in a heat pump as claimed in Claim 1, characterized in that said working surface constitutes a first working surface of the liquid piston facing a gas chamber located in the cylinder, which piston further has a second working surface which faces a liquid chamber located in the cylinder and which is smaller than the first working surface and is separated therefrom by the liquid piston, the gas chamber being connected to the gaseous working medium in the heat pump alternately at a comparatively low and a comparatively high pressure level, whilst synchronously therewith the liquid chamber is connected to the liquid solution in the heat pump alternately at a comparatively low and a comparatively high pressure level, and the cylinder being provided with a guide member for the piston, which guide member is arranged in the liquid chamber and extends into a recess in the piston, whilst an end face of the guide member defines with the recess an auxiliary chamber having a variable volume of liquid solution, whose pressure level at least during the delivery stroke of the liquid piston is substantially equal to the low pressure level of the liquid solution in the heat pump.

10.       A liquid pump as claimed in Claim 9, characterized in that the piston is provided with a gas duct which after rotational movement of the piston in a first direction during the suction stroke forms a connection between the gas chamber and a low-pressure gas port in the cylinder, and with a liquid duct which after rotational movement of the piston in the first direction during the suction stroke forms a connection between the liquid chamber and a low-pressure liquid port in the cylinder, whilst after rotational movement of the piston in a second direction opposite to the first direction the gas duct in the piston forms a connection between the gas chamber and a high-pressure gas port in the cylinder and the liquid duct in the piston forms a connection between the liquid chamber and a high-pressure liquid port in the cylinder.

11.       A liquid pump as claimed in Claim 10, characterized in that the cylinder is provided with a fixedly arranged pin which in cooperation with a groove in the piston constitutes a guide for the piston, the groove having the form of a continuous curve comprising two tracks which are parallel to the central longitudinal axis of the piston and are connected to each other by tracks extending obliquely with respect to said axis.

12.       A liquid pump as claimed in Claim 9, characterized in that the gas chamber is connected by means of the gas change-over valve to gaseous working medium in the heat pump alternately at a comparatively low and a comparatively high pressure, whilst synchronously therewith the liquid chamber is connected by means of a liquid change-over valve to liquid solution in the heat pump alternately at a comparatively low and a comparatively high pressure.

13.       A liquid pump as claimed in Claim 9, characterized in that an integrated unit with a liquid change-over valve and a gas change-over valve comprises a common valve slide displaceable in a housing in a reciprocatory manner and having two operative positions, whereby in a first operative position corresponding to the beginning of the suction stroke a connection is formed by means of a first recess in the valve slide between a first gas port in the housing at a comparatively low pressure level and a first working surface of the valve slide, and a connection is formed by means of a second recess in the valve slide between a first liquid port in the housing at a comparatively high pressure level and a second working surface of the valve slide located opposite to the first working surface and to the said auxiliary chamber, whilst in a second operative position corresponding to the beginning of the delivery stroke a connection is formed by means of the first recess between a second gas port in the housing at a comparatively high pressure level and the first working surface and a connection is formed by means of the second recess between a second liquid port in the housing at a comparatively low pressure level and the second working surface and to said auxiliary chamber.

0146989

**FIG.1**

0146989

FIG.2

0146989

FIG.3

0146989

FIG.4

0146989

FIG.5

0146989

FIG.6

FIG.7

0146989

299

301

305

61,281

329
319 — — 319
323
317

295

313
315

IX

333

293

283
325
335

327
331

309
307

311
303
287

291

286

FIG.8

325   265   227   251
267

283           305

283

293           315

313           295

FIG.9

FIG.10

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 369 373 (MERRICK) <br> * Whole document * | 1,9 | F 25 B 15/02 |
| A | FR-A- 628 807 (GAGNAN) <br><br> * Whole document * | 1,2,6, 9,10, 13 | |
| A | US-A-2 207 260 (KUENZLI) <br><br> * Whole document * | 1,2,9, 10 | |
| A | US-A-2 930 204 (LANG) <br> * Whole document * | 1,9 | |
| A | GB-A- 773 721 (BORSIG AG) <br> * Whole document * | 1,9 | TECHNICAL FIELDS SEARCHED (Int. Cl.4) |
| A | US-A-3 046 756 (WHITLOW et al.) <br><br> * Whole document * | 1,5,8, 9,12 | F 25 B <br> F 04 B |
| A | US-A-1 428 958 (HAPGOOD) <br> * Whole document * | 1,9 | |
| A | GB-A- 255 035 (MUNTERS) <br> * Whole document * | 6,7,13 | |

--- -/-

The present search report has been drawn up for all claims

| Place of search <br> THE HAGUE | Date of completion of the search <br> 27-03-1985 | Examiner <br> SILVIS H. |
|---|---|---|

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A- 639 373  (MUNTERS)<br>* Whole document * | 6,7,13 | |
| A | DE-A-3 133 387  (NOACK et al.) | | |

TECHNICAL FIELDS
SEARCHED (Int. Cl.4)

The present search report has been drawn up for all claims

| Place of search | Date of completion of the search | Examiner |
|---|---|---|
| THE HAGUE | 27-03-1985 | SILVIS H. |

EPO Form 1503 03 82